# EUROPÄISCHE PATENTANMELDUNG

(11) **EP 1 526 042 A1**
(43) Veröffentlichungstag der Anmeldung: **27.04.2005**
(21) Anmeldenummer: 04016434.5
(22) Anmeldetag: 13.07.2004
(51) Int. Cl.: B60R 21/13

(54) **Überrollbügel**

(30) Priorität: 24.10.2003 DE 10349693
(71) Anmelder: ISE Innomotive Systems Europe GmbH, 51702 Bergneustadt (DE)
(72) Erfinder: Röhner, Stephan, Dr., 44287 Dortmund (DE); Beki, Gürkan, 51766 Engelskirchen (DE); Maier, Dirk, 53731 Siegburg (DE)
(74) Vertreter: Grünecker, Kinkeldey, Stockmair & Schwanhäusser Anwaltssozietät

(57) **Zusammenfassung**

Bei einem Überrollschutz-Körper (K) in Schalen- oder Profilbauweise für Kraftfahrzeuge, der zwei miteinander verbundene Schalen (A, B) oder ein Hohlprofil (B') aus Stahlund/oder Leichtmetallblech und/oder Faserverbundkunststoff oder aus Guss-, Schmiede- oder Sintermaterial aufweist, jeweils mit wenigstens einem innenliegenden Hohlraum (H), und mit im Hinblick auf einen Fahrzeug-Überschlag belastungsorientiert ausgebildeten Querschnittsstrukturierungen (9, 9'), ist im Hohlraum (H) wenigstens eine die Belastungsorientierung ergänzende Aussteifungsstruktur (V) angeordnet, die entweder lose eingesetzt und erst unter einer vorbestimmten Belastung des Überrollschutz-Körpers (K) mit den Schalen (A, B) bzw. dem Hohlprofil (B) in lastaufnehmenden Eingriff bringbar, oder lastaufnehmend direkt an zumindest einer Schale (A, B) bzw. dem Hohlprofil (B') befestigt ist.

## Beschreibung

Die Erfindung betrifft einen Überrollschutz-Körper gemäß Oberbegriff des Patentanspruchs 1.

Ein Überrollschutz-Körper dient im Überrollschutz-System des Fahrzeugs als fest oder ausfahrbar eingebauter Überrollbügel zum Insassenschutz im Falle eines Fahrzeugüberschlags. Ausgehend von früheren, gebogenen Metallrohrkörpern vollzog sich die Entwicklung zu Strangpresshohlprofilen oder Doppelschalenblechkonstruktionen und parallel zu doppelschaligen Pressformkonstruktionen aus endlosfaserverstärktem Faserverbundkunststoff.

Bei dem aus DE 298 07 322 U bekannten, einen Überrollbügel bildenden Überrollschutz-Körper sind zwei wannenförmige Schalen aus endlosfaserverstärktem Faserverbundkunststoff zumindest entlang ihrer Randflansche miteinander verbunden. Vorwiegend in den Schalenflachseiten sind aufwendige Querschnittsstrukturierungen eingeformt, um ein belastungsorientiertes Verformungsverhalten zu erzielen, weil bei einem Überschlag Belastungen unterschiedlicher Ausmaße und in unterschiedlichen Richtungen aufzunehmen und in den Fahrzeugkörper einzuleiten sind. Ähnliche Querschnittsstrukturierungen werden auch bei Metallblechschalenkonstruktionen und Hohlprofilkonstruktionen bekannter Überrollschutz-Körper zur Belastungsorientierung vorgesehen. Gegebenenfalls werden, ebenfalls zur Belastungsorientierung, ferner die Wandstärken innerhalb des Überrollschutz-Körpers variiert. Gemeinsam ist allen bekannten Konzepten, dass der Überrollschutz-Körper mit seiner Wandstärke und den Querschnittsstrukturierungen den Belastungen zu widerstehen und diese abzuleiten hat. Dies bedingt zum Teil eine erhebliche Wandstärke, aus der relativ hohes Gesamtgewicht resultiert.

Es ist zwar aus DE 38 39 855 A ein als Strukturteil für Kraftfahrzeugtüren, Stoßfängerträger, Front- und Heckschalen und Türschweller für Personenkraftwagen eingesetzter Leichtbauteil aus einem einzigen schalenförmigen Grundkörper aus Metallblech oder faserverstärktem Kunststoff bekannt, dessen Innenraum mit dem Grundkörper fest verbundene Verstärkungsrippen aufweist, die aus angespritztem Kunststoff bestehen und deren Verbindung mit dem einzigen Grundkörper an diskreten Verbindungsstellen über Durchbrüche erfolgt, durch welche der Kunststoff hindurch- und über die Flächen der Durchbrüche hinausreicht. Mit den Verstärkungsrippen werden die Knickstabilität und die Torsionssteifigkeit des Grundkörpers gesteigert. Jedoch eignen sich solche Leichtbauteile nicht als Überrollschutz-Körper.

Ferner ist aus DE 1 704 387 A ein als bei einem Aufprall nachgebende oder zusammenbrechende Sicherheitsplatte für Automobile ausgebildeter, hohler Kunststoffbauteil bekannt, der ein Paar gegenüberliegender Kunststofffolien und ein hohles Kernglied aus Kunststoff aufweist, das mit den Folien verschmolzen ist. Das Kernglied wird entweder vorgefertigt oder direkt aus den beiden Folien geformt. Der hohle Kunststoffbauteil besteht aus unverstärktem Kunststoff und ist als Überrollschutz-Körper nicht brauchbar, weil er den vorgeschriebenen Belastungsanforderungen nicht gerecht wird.

Der Erfindung liegt die Aufgabe zugrunde, einen Überrollschutz-Körper der eingangs genannten Art anzugeben, der bei geringem Gewicht ein besser belastungsorientiertes Verformungsverhalten bei einem Überschlag erbringt, bzw. trotz zumindest bereichsweise geringer Wandstärke der Schalen- bzw. des Hohlprofils erhöhte Beulfestigkeit hat.

Die gestellte Aufgabe wird mit den Merkmalen des Anspruchs 1 gelöst.

Die im Hinblick auf einen Fahrzeugüberschlag belastungsorientierten Querschnittsstrukturierungen der Schalen bzw. des Hohlprofils werden durch die im Hohlraum angeordnete Aussteifungsstruktur unterstützt. Die Aussteifungsstruktur ergänzt oder verbessert die Belastungsorientierung des gesamten Überrollschutz-Körpers, in dem sie einerseits bei einem Überschlag Belastungen gezielt aufnimmt und weiterleitet und andererseits die Beulfestigkeit speziell in den Flachseiten der Schalen bzw. des Hohlprofils erhöht, weil sie das unkontrollierte Ausweichen der Schalen bzw. des Hohlprofils unterbindet. Die Aussteifungsstruktur kann lose eingesetzt sein, so dass sie erst unter einer vorbestimmten Belastung des Überrollschutz-Körpers in lastaufnehmenden Kontakt mit den Schalen bzw. dem Hohlprofil kommt und die Belastungsorientierung ergänzt, oder bereits lastaufnehmend mit den Schalen bzw. dem Hohlprofil einen Verbund bilden, so dass sie bei einem Überschlag sofort an der Belastungsaufnahme und Weiterleitung teilnimmt. Die Aussteifungsstruktur ermöglicht es, zumindest bereichsweise die Wandstärke der Schalen bzw. des Hohlprofils zu verringern, speziell da sie die Beulfestigkeit auch bei geringer Wandstärke signifikant erhöht. Dadurch kann Gewicht eingespart werden.

Im Hinblick auf eine hohe Gewichtseinsparung kann die Aussteifungsstruktur den Hohlraum zwischen den Schalen bzw. im Hohlprofil in einzelne Teilhohlräume unterteilen. Die Gestaltung und Größe der Teilhohlräume werden im Hinblick auf die gewünschte Belastungsorientierung gewählt.

Die Aussteifungsstruktur ist zweckmäßig aus Stahl- und/oder Leichtmetallblech ausgebildet, und/oder aus Faserverbundkunststoff und/oder Kunststoff bzw. aus Kunststoff- und/oder Metallschaum und/oder aus Guss, Schmiede- oder Sintermaterial.

Bei einer bevorzugten Ausführungsform wird die Aussteifungsstruktur aus Kunststoff oder Faserverbundkunststoff oder Kunststoff- oder Metallschaum an zumindest eine Schale innenseitig oder in das Hohlprofil eingespritzt. Dies ist herstellungstechnisch günstig und führt zu einem innigen Verbund zwischen der Aussteifungsstruktur und wenigstens einer Schale oder dem Hohlprofil.

Für die Ergänzung der Belastungsorientierung kann es ausreichen, wenn die Aussteifungsstruktur den Hohlraum nur zum Teil ausfüllt. Dies schließt jedoch eine vollständige Ausfüllung des Hohlraums, beispielsweise mit Schaum, nicht aus.

Besonders wichtig bringt die Aussteifungsstruktur vorwiegend die Flachseiten der Schalen bzw. des Hohlprofils in einen gegenseitigen Verbund, wodurch die Flachseiten beulfester werden und unter Belastungen einander gegenseitig über die Aussteifungsstruktur unterstützen können.

Bei einer alternativen Ausführungsform wird die Aussteifungsstruktur vorgefertigt und nachträglich eingesetzt. Dies kann herstellungstechnische Vorteile bieten.

Bei einer zweckmäßigen Ausführungsform ist die Aussteifungsstruktur ein Spritzgussformteil aus Kunststoff. In der Aussteifungsstruktur sind einander kreuzende Stege und dazwischen Teilhohlräume vorgesehen. Der Spritzgussformteil kann aus unverstärktem Kunststoff bestehen, oder vorzugsweise, aus kurz- oder langfaserverstärktem Kunststoff.

Bei einer anderen Alternative ist die Aussteifungsstruktur ein Pressformteil aus endlosfaserverstärktem Kunststoff, d.h. sogenanntem Faserverbundkunststoff. Dieser Pressformteil hat bei geringem Gewicht außerordentlich hohe Festigkeit und lässt sich mit großer Formvielfalt gestalten, um die Belastungsorientierung des Überrollschutz-Körpers optimal zu ergänzen.

Bei einer weiteren Alternative, die sich bevorzugt für Metallblechschalen bzw. - hohlprofile anbietet, ist die Aussteifungsstruktur ein Blechstanz-Pressformteil, vorzugsweise entweder mit gleichbleibender oder variierender Blechstärke. Wird diese Aussteifungsstruktur nach dem Einlegen mit den Schalen bzw. dem Hohlprofil in einen Verbund gebracht, so bieten sich übliche Metallverbindungsarten an, wie Punktschweißen, Laserschweißen, Nieten, Verschrauben, Clinchen, Verkleben oder dgl..

Zweckmäßig weist die Aussteifungsstruktur von vomherein zu Verbindungsstellen der Schalen bzw. des Hohlprofils passende Verbindungselemente auf, um mit montagetechnisch geringem Aufwand in den wünschenswerten Verbund mit den Schalen bzw. dem Hohlprofil gebracht werden.

Bei einer besonders zweckmäßigen Ausführungsform wird die Aussteifungsstruktur in die eine, wannenförmig gestaltete Schale direkt eingespritzt und mit Längs- und Querhochstegen und ggfs. wenigstens einem Mittelsteg gestaltet. Als Werkstoff eignet sich hierfür Kunststoff oder faserverstärkter Kunststoff oder Metallguss- bzw. Sintermaterial. Die Stege werden mit einem Überstand über die Schalenränder ausgebildet, z.B. passend zur Innenkontur der anderen Schale, so dass die Aussteifungsstruktur mit der dann aufgesetzten, ebenfalls wannenförmigen anderen Schale kraft- und/oder formschlüssig verbindbar ist. Die beiden Schalen werden in direkten Verbund miteinander gebracht, und auch indirekt über die Versteifungsstruktur in einen lastaufnehmenden und belastungsorientierten Verbund gezwungen.

Bei dieser Bauweise empfiehlt es sich, an der Aussteifungsstruktur, vorzugsweise an Hochsteg-Kreuzungsstellen, Dome anzuformen und die Dome dann durch Ausschnitte der anderen, später aufgebrachten Schale greifen zu lassen. In diesen Bereichen wird dann der Verbund, speziell in der Flachseite der anderen Schale, mit der Aussteifungsstruktur hergestellt, wobei sich als Verbindungsarten beispielsweise Verstemmen, Heißluftfügen, Ultraschallschweißen, Schweißen, oder Verkleben anbieten. Mit der einen Schale, an die die Aussteifungsstruktur angespritzt ist, besteht ohnedies bereits durch das Herstellverfahren ein inniger Verbund.

Speziell bei einem Hohlprofil, das wenigstens einen oder nebeneinander mehrere kanalartige Hohlräume aufweisen kann und bereits geschlossen ist, wenn es mit der Aussteifungsstruktur versehen wird, kann die Aussteifungsstruktur aus Kunststoff direkt eingespritzt werden. Hierbei bietet sich als Material wieder unverstärkter Kunststoff oder faserverstärkter Kunststoff an, oder auch Kunststoff- oder Metallschaum, bzw. Metallguss-, Sinter- oder Schmiedewerkstoff.

Bei einer weiteren Alternative und einem Hohlprofil, das beispielsweise als warmumgeformtes Hohlprofil mit wenigstens einem kanalartigen Hohlraum ausgebildet ist, wird wenigstens eine Aussteifungsstruktur, beispielsweise aus Kunststoff oder Metall, vorgefertigt und nur eingeschoben und dann festgelegt. Zum Festlegen bieten sich Stecknieten oder Spannschrauben oder eine Clipsverbindung an, die die Hohlprofilflachseiten in einen gegenseitigen Verbund und in einen Verbund mit der Aussteifungsstruktur zwingen.

Bei einer als Blechkonstruktion ausgebildeten Aussteifungsstruktur bietet es sich an, die Aussteifungsstruktur mehrfach an beiden Schalen zu befestigen, vorzugsweise durch Punktschweißen, Vernieten oder Verschrauben oder ähnliche Verbindungsweisen. Diese Bauweise bietet den Vorteil, die einzelnen Komponenten getrennt voneinander vorfertigen und dann einfach miteinander verbinden zu können.

Die vorwiegend zur Ergänzung des belastungsorientierten Verformungsverhaltens des Überrollschutz-Körpers vorgesehene Aussteifungsstruktur oder sogar mehrere solcher Aussteifungsstrukturen können eine Zusatzfunktion erfüllen. Zu diesem Zweck greifen sie beispielsweise, vorzugsweise in Randbereichen des Überrollschutz-Körpers, nach außen, um Anschlusspunkte für Funktionsteile oder Funktionsteile selbst zu bilden. Solche Funktionsteile können Gleit- oder Rastschienen, Anschraubpunkte, Klipsaufnahmen, Umspritzbestandteile oder dgl. sein oder zum Befestigen solcher Teile dienen. Speziell bei Ausbildung der Aussteifungsstruktur aus Kunststoff lässt sich so die mögliche Formvielfalt gewinnbringend für eine Zusatzfunktion nutzen.

Anhand der Zeichnungen werden Ausführungsformen des Erfindungsgegenstandes erläutert. Es zeigen:
- Fig. 1: eine Schemaansicht eines Überrollschutz-Systems mit einem Überrollschutz-Körper in Schalenbauweise,
- Fig. 2: eine Perspektivansicht eines Herstellungsschrittes des Überrollschutz-Körpers nach Fig. 1,
- Fig. 3: eine Perspektivansicht zur Endmontage des Überrollschutz-Körpers von Fig. 1,
- Fig. 4: eine Perspektivansicht eines ersten Vorfertigungsschrittes eines Überrollschutz-Körpers in Schalenbauweise bei einer weiteren Ausführungsform,
- Fig. 5: einen Querschnitt eines fertigen Überrollschutz-Körpers in Profilbauweise, und
- Fig. 6: einen Querschnitt eines fertigen Überrollschutz-Körpers in Profilbauweise, in einer weiteren Ausführungsform.

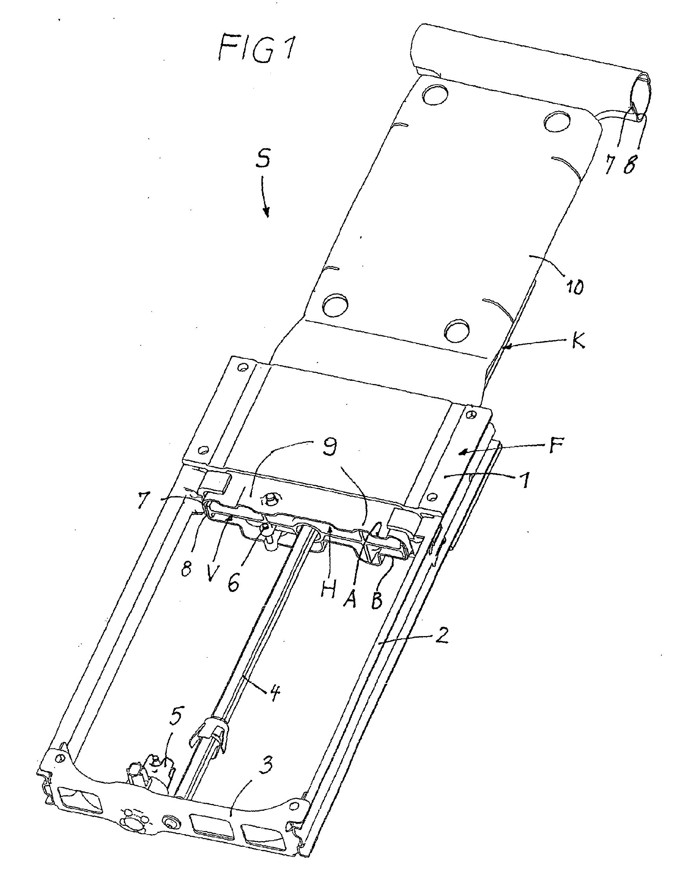

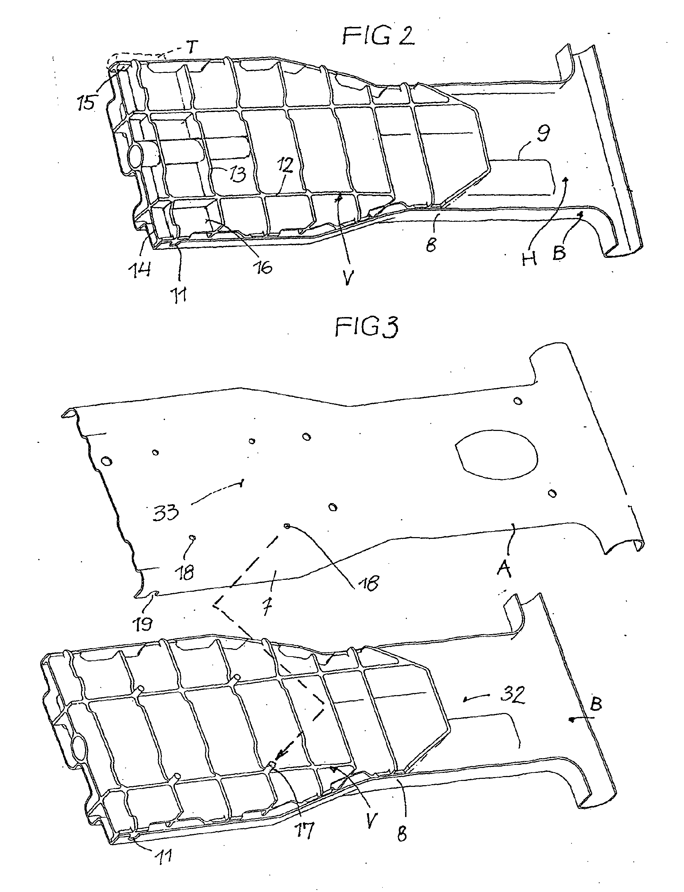

Fig. 1 verdeutlicht einen Hauptbestandteil eines Überrollschutz-Systems S für ein Kraftfahrzeug. Das Überrollschutz-System wird beispielsweise an einer Querwand des Fahrzeugkörpers montiert und enthält, bei der gezeigten Ausführungsform in Fig. 1, einen ausfahrbaren Überrollschutz-Körper K, der beispielsweise wie in den Fig. 2 und 3 angedeutet, gestaltet ist.

Der Überrollschutz-Körper K in Fig. 1 ist in einer kassettenartigen Führung F mit einem Schacht 1 und holmartigen Führungsstreben 2 und einer unteren Verbindungsstrebe 3 verschiebbar montiert. Auf einer von der Querstrebe 3 bis ins Innere des Überrollschutz-Körpers K eindringenden Führungsstange 4 kann eine nicht gezeigte Ausschiebefeder montiert sein. Der Überrollschutz-Körper K ist in ausgefahrenem Zustand gezeigt, in dem eine Verriegelung 5 gelöst ist, die bei eingeschobenem Überrollschutz-Körper K mit einem Anker 6 zusammenwirkt.

Alternativ könnte der Überrollschutz-Körper K im Fahrzeug auch fest eingebaut sein.

Der Überrollschutz-Körper K in den Fig. 1 bis 3 ist in Schalenbauweise ausgebildet und besteht aus zwei wannenartigen Schalen A, B, deren Ränder 7, 8 miteinander verbunden sind. Speziell in den Flachseiten 32, 33 (Fig. 3) der Schalen A, B sind zur belastungsorientierten Kraftaufnahme bei einem Überschlag Querschnittsstrukturierungen 9 eingeformt, beispielsweise Sicken, Nuten, Falzungen oder dgl.. Die Schalen A, B können aus Stahl- oder Leichtmetallblech bestehen, oder aus einem faserverstärktem Kunststoff, zweckmäßigerweise aus Faserverbundkunststoff mit Endlosfasern oder aus einem Metallguss-, Sinter- oder Schmiedematerial. Am in Fig. 1 oberen Ende des Überrollschutz-Körpers K kann eine Abdeckung 10 angebracht sein, die ebenfalls kraftübertragend in den Überrollschutz-Körper K eingegliedert sein kann.

In eingebautem Zustand des Überrollschutz-Systems S wird bei einem Fahrzeugüberschlag bei Bodenkontakt zunächst das Fahrzeuggewicht mit der Beschleunigungsenergie vom Überrollschutz-Körper K aufgenommen, der in der Führung F verriegelt ist, und über die Führung F Kräfte in den Fahrzeugkörper eingeleitet. Zusätzlich zu solchen Stauchbelastungen wirken jedoch aus der Dynamik des Unfalls auch Biege- und Torsionsbelastungen in verschiedenen Richtungen auf den Überrollschutz-Körper ein. Aus diesem Grund muss der Überrollschutz-Körper mit belastungsorientiertem Verformungsverhalten gestaltet sein, um mit möglichst geringem Gewicht allen auftretenden Belastungsrichtungen und -arten zu widerstehen, ohne überdimensioniert zu sein. Zur Ergänzung der Belastungsorientierung des Überrollschutz-Körpers K durch die Querschnittsstrukturierungen 9 ist deshalb in dem wenigstens einen zwischen den Schalen A, B vorgesehenen Hohlraum H wenigstens eine Aussteifungsstruktur V vorgesehen. Die Aussteifungsstruktur V kann den Hohlraum H zur Gänze oder auch nur zum Teil ausfüllen, und kann entweder nur lose eingesetzt oder in Anlage eingesetzt oder sogar mit den Schalen verbunden sein und diese in einen gegenseitigen Verbund bringen. Die Aussteifungsstruktur V kann aus Kunststoff und/oder Metall bestehen und vor dem Verbinden der Schalen A, B oder nach dem Verbinden der Schalen eingebracht sein.

Beispielsweise wird der Überrollschutz-Körper K von Fig. 1 entweder gemäß Fig. 2 oder gemäß Fig. 3 zusammengebaut.

In Fig. 2 wird die wannenförmige Schale B in ein Spritzgusswerkzeug (nicht gezeigt) eingelegt, und wird die Aussteifungsstruktur V direkt in die Innenseite der Schale B eingespritzt. Die Aussteifungsstruktur V ist hierbei ein Spritzgussformteil aus einander überkreuzenden Quer- und Längshochstegen 12, 13 und mindestens einem in etwa parallel zur Flachseite der Schale B verlaufenden, durchgehenden Mittelsteg 14. In den Außenrandbereichen können kurze Hochstegabschnitte 15 angeformt sein, mit denen sich die Aussteifungsstruktur an den Rändern 8 in der Schale B abzustützen vermag. Zwischen den Stegen 12, 13, 15, 14 werden Teilhohlräume 16 ausgebildet, die in Größe und Form voneinander verschieden sein können.

Beispielsweise in den Rändern 8 der Schale B, die wie auch die Schale A aus Leichtmetall- oder Stahlblech bestehen kann, oder aus Faserverbundkunststoff, sind Ausschnitte 11 ausgespart, durch welche entweder mit der Aussteifungsstruktur V verbundene oder in diese integrierte Funktionsteile T nach außen greifen können. Solche Funktionsteile können beispielsweise Gleit- oder Rastschienen, Anschraubpunkte, Klipsaufnahmen, Umspritzbestandteile, oder dgl. sein, die für zusätzliche Funktionen des Überrollschutz-Körpers gebraucht werden.

Die Hochstege 12, 13 sind in Fig. 2 über die Ränder 8 nach oben überstehend geformt, so dass die später aufgelegte andere Schale A (in Fig. 2 nicht gezeigt) zumindest bereichsweise auf den Hochstegen 12, 13, und gegebenenfalls 15, aufliegt, sobald sie ordnungsgemäß mit der einen Schale B verbunden ist. Auf diese Weise stehen die beiden Schalen A, B mit der Aussteifungsstruktur in einem festen Verbund.

Alternativ könnte die Aussteifungsstruktur V vorgefertigt und nachträglich eingelegt und, falls erforderlich, an jeder Schale A, B festgelegt werden. Die Aussteifungsstruktur könnte auch aus endlosfaserverstärktem Faserverbundkunststoff bestehen und ein Pressformteil sein. Geeignet ist auch Metallguss-, Sinter- oder Schmiedematerial.

Bei der in Fig. 3 angedeuteten Ausführungsform ist die Aussteifungsstruktur V, die direkt in die eine Schale B eingespritzt und mit dieser verbunden wird, an Kreuzungsstellen der Hochstege mit Domen 17 geformt. Diese Dome 17 greifen nach Auflegen der anderen Schale A durch Öffnungen 18 beispielsweise in deren Flachseite 33 und dienen dann zum festen Verbinden auch der anderen Schale A mit der Aussteifungsstruktur V. Die Dome 17 können beispielsweise durch Verstemmen, Heißluftfügen, Ultraschallschweißen, Schweißen oder Verkleben oder auf andere Weise einen festen Verbund zwischen der Schale A und der Aussteifungsstruktur V herstellen. Auch in den Rändern 7 der anderen Schale A sind Ausschnitte 19 geformt, durch die der in Fig. 2 angedeutete Funktionsteil T als Bestandteil der Aussteifungsstruktur V nach außen greifen könnte.

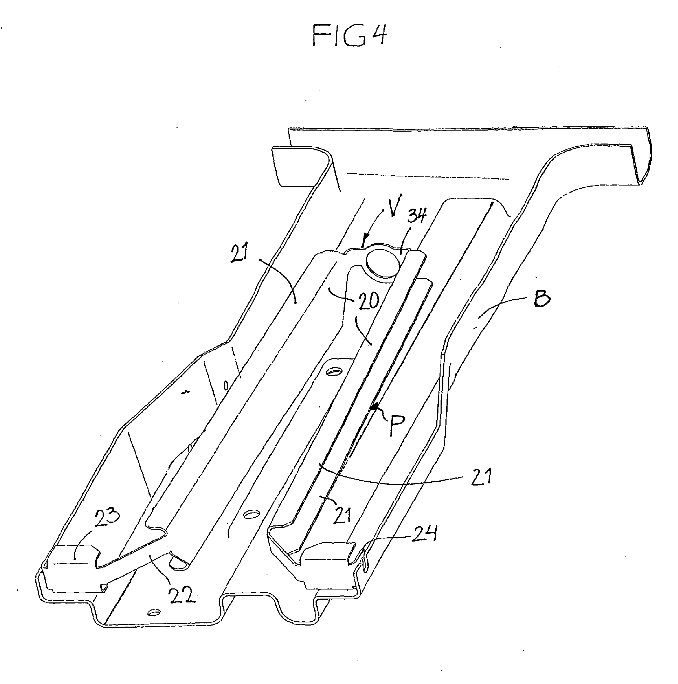

Die Ausführungsform in Fig. 4 zeichnet sich dadurch aus, dass in die Schale B die vorgefertigte Aussteifungsstruktur V, hier beispielsweise als Blechpress- und Formteil P, eingelegt und lagegesichert wird. Die Aussteifungsstruktur V besitzt beispielsweise einen Quersteg 34, der in etwa hochkant zur Flachseite der einen Schale B angeordnet ist und einen Durchgang für die in Fig. 1 angedeutete Stange 4 enthält, und am Quersteg 34 angeformte Längsstege 20 als C-Profile mit Befestigungsflanschen 21. An den freien Enden der Längsstege 20 schließen sich über bandartige Abschnitte 22 weitere Befestigungsflansche 23 mit Seitenlappen 24 an. Diese Aussteifungsstruktur V wird in die eine Schale B eingelegt und an mehreren Befestigungsstellen mit der einen Schale B verbunden, z.B. durch Punktschweißen, Vernieten, Schweißen, Verschrauben oder dgl.. Dann wird die andere, in Fig. 4 nicht gezeigte Schale A aufgelegt und werden die Ränder 7, 8 der Schalen miteinander verbunden und auch die andere Schale A beispielsweise an den Flanschen 21, 23, 24 auch mit der Aussteifungsstruktur V verbunden.

Bei einer nicht gezeigten Alternative könnte diese Aussteifungsstruktur V von Fig. 4 auch ein Kunststoffformteil sein, beispielsweise aus faserverstärktem Kunststoff. Die Schalen A, B in Fig. 4 sind zweckmäßigerweise aus Leichtmetall- oder Stahlblech ausgebildet. Es wäre denkbar, die noch verbleibenden Teil-Hohlräume zwischen den Schalen nachträglich mit Kunststoff- oder Metallschaum zumindest teilweise auszuspritzen.

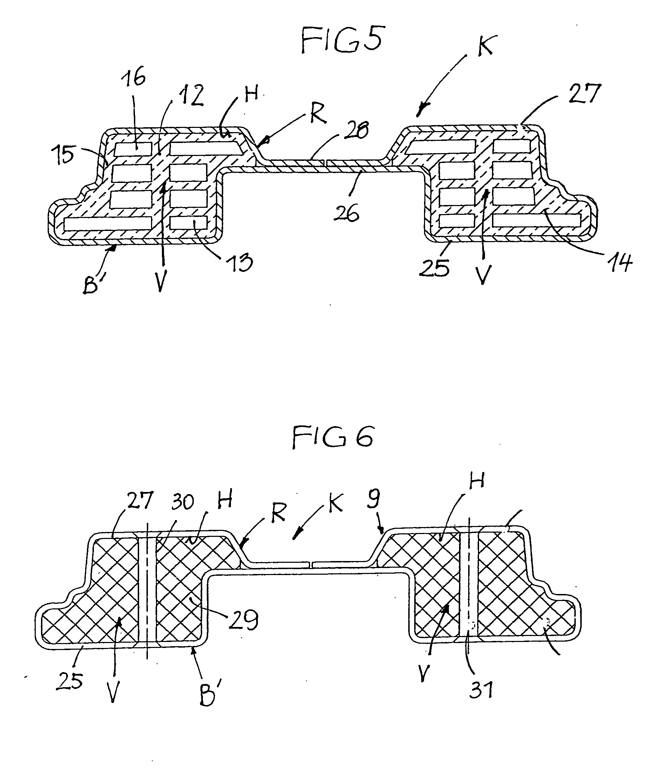

Bei dem in Fig. 5 in einem Querschnitt angedeuteten Überrollschutz-Körper K ist eine Profilbauweise gewählt, d.h., es ist beispielsweise ein warmumgeformtes Hohlprofil R, B' aus Leichtmetall- oder Stahlblech vorgesehen, das zwischen Flachseiten 25, 27, 26, 28 mindestens einen, hier sogar zwei, kanalförmigen Hohlraum H enthält, wobei die Flachseiten 26, 28 einander berühren und miteinander verbunden sein können, während die Flachseiten 25, 27 des hier z.B. mit der Form annähemd einer Acht insgesamt geschlossenen Hohlprofils über die Aussteifungsstruktur V in einem gegenseitigen, lastübertragenden oder lastabtragenden Verbund stehen. Die Aussteifungsstruktur V ist in Fig. 5 aus einem Kunststoff oder Schaumstoff, gegebenenfalls mit Faserverstärkung, direkt jeden Hohlraum H eingespritzt, derart, dass die Stege 12, 14 und die Teilhohlräume 16 gebildet werden, und die Aussteifungsstruktur V vollflächig an der Innenwand des Hohlprofils B' angehaftet ist. Die Aussteifungsstrukturen V füllen jeden Hohlraum H z. B. vollständig aus.

Bei der in Fig. 6 gezeigten Ausführungsform ist ebenfalls ein beispielsweise warmumgeformtes Hohlprofil R, B' ähnlich dem von Fig. 5 vorgesehen, um den Überrollschutz-Körper K auszubilden. Bei dieser Ausführungsform sind die Aussteifungsstrukturen V vorgefertigt und nachträglich lose oder in einem Presssitz in die Hohlräume H eingeschoben und in quer durchgehenden Durchbrüchen 30 beispielsweise über Stecknieten 31 positioniert. Die Stecknieten 31 stellen den Verbund zwischen den Flachseiten des Hohlprofils B und auch mit den Aussteifungsstrukturen V her. Die Aussteifungsstrukturen V könnten, wie bei den anderen Ausführungsformen, miteinander überkreuzenden Stegen und Teilhohlräumen ausgebildet sein, oder als Vollteile ohne Teilhohlräume. Ferner könnten diese Aussteifungsstrukturen V aus Schaumkunststoff oder Metallschaum gespritzt sein.

In einer einfachen, nicht gezeigten Ausführungsform könnte die jeweilige Aussteifungsstruktur vorgefertigt und nachträglich nur lose eingesetzt und lagegesichert sein, derart, dass sie erst bei einer Deformation der Schalen A, B oder des Hohlprofils B' in lastaufnehmenden Verbund damit treten.

Da die Aussteifungsstruktur bei jeder Ausführungsform vor allem die Beulfestigkeit in den Flachseiten der Schalen A, B. bzw. des Hohlprofils B' signifikant erhöht, kann die Außenwandstärke zumindest bereichsweise relativ verringert werden, weil die Aussteifungsstruktur zum belastungsorientierten Verformungsverhalten der Schalen bzw. des Hohlprofils nennenswert beiträgt und vor allem zwischen den Flachseiten der Schalen bzw. des Hohlprofils einen Belastungen wirksam abtragenden Verbund herstellt.

## Patentansprüche

1. Überrollschutz-Körper in Schalen- oder Profilbauweise, insbesondere für Kraftfahrzeuge, der in Schalenbauweise zwei miteinander verbundene Schalen (A, B) und in Profilbauweise ein Hohlprofil (B') aus Stahl- und/oder Leichtmetallblech und/oder Faserverbundkunststoff aufweist, jeweils mit wenigstens einem innenliegenden Hohlraum (H), und mit im Hinblick auf einen Fahrzeug-Überschlag belastungsorientiert ausgebildeten Querschnittsstrukturierung (9, 9') wenigstens einer Schale (A, B) oder im Hohlprofil, **dadurch gekennzeichnet, dass** im Hohlraum (H) des Überrollschutz-Körpers (K) wenigstens eine das belastungsorientierte Verformungsverhalten ergänzende Aussteifungsstruktur (V) angeordnet und entweder lose eingesetzt und erst unter einer vorbestimmten Belastung des Überrollschutz-Körpers (K) mit den Schalen (A, B) bzw. dem Hohlprofil (B') in lastaufnehmenden Eingriff bringbar oder lastaufnehmend an zumindest einer Schale (A, B) bzw. dem Hohlprofil (B') befestigt ist.

2. Überrollschutz-Körper nach Anspruch 1, **dadurch gekennzeichnet, dass** die Aussteifungsstruktur (V) den Hohlraum (H) in einzelne Teilhohlräume (16) unterteilt.

3. Überrollschutz-Körper nach Anspruch 1, **dadurch gekennzeichnet, dass** die Aussteifungsstruktur (V) aus Stahl- und/oder Leichtmetallblech und/oder Faserverbundkunststoff und/oder Kunststoff und/oder Kunststoff- oder Metallschaum und/oder aus Metallguss-, Sinter- oder Schmiedematerial besteht.

4. Überrollschutz-Körper nach Anspruch 1, **dadurch gekennzeichnet, dass** die Aussteifungsstruktur (V) aus Kunststoff oder Faserverbundkunststoff oder Kunststoff- oder Metallschaum oder Sinter- bzw. Gussmaterial an zumindest eine Schale (A, B) innenseitig angespritzt oder in das Hohlprofil (B') eingespritzt ist.

5. Überrollschutz-Körper nach Anspruch 1, **dadurch gekennzeichnet, dass** die Aussteifungsstruktur (V) den Hohlraum (H) vollständig oder nur zum Teil ausfüllt.

6. Überrollschutz-Körper nach Anspruch 1, **dadurch gekennzeichnet, dass** die Aussteifungsstruktur (V) vorwiegend die Flachseiten (32, 33, 25, 27) der Schalen (A, B) bzw. des Hohlprofils (B') aussteifend in einem Verbund hält.

7. Überrollschutz-Körper nach Anspruch 1, **dadurch gekennzeichnet, dass** die Aussteifungsstruktur (V) vorgefertigt und nachträglich zwischen die Schalen (A, B) bzw. in das Hohlprofil (B') eingesetzt ist.

8. Überrollschutz-Körper nach wenigstens einem der vorhergehenden Ansprüche, **dadurch gekennzeichnet, dass** die Aussteifungsstruktur (V) ein Spritzgussformteil aus Kunststoff ist, vorzugsweise ein einander kreuzende Stege (12 bis 15) und die Teilhohlräume (16) aufweisender Spritzgussteil, vorzugsweise aus kurz- oder langfaserverstärktem Kunststoff.

9. Überrollschutz-Körper nach wenigstens einem der vorhergehenden Ansprüche, **dadurch gekennzeichnet, dass** die Aussteifungsstruktur (V) ein Pressformteil aus endlosfaserverstärktem Kunststoff ist.

10. Überrollschutz-Körper nach Anspruch 7, **dadurch gekennzeichnet, dass** die Aussteifungsstruktur (V) ein Blechstanz-Pressformteil (P) ist.

11. Überrollschutz-Körper nach Anspruch 1, **dadurch gekennzeichnet, dass** die Aussteifungsstruktur (V) zu Verbindungsstellen (18, 10, 19) der Schalen (A, B') bzw. des Hohlprofils (B') passende Verbindungselemente (17) aufweist, vorzugsweise angeformte Dome für Aufnahmebohrungen, integrierte Flansche (21, 23, 24) für Punktschweiß-, Niet- oder Schraubverbindungen, Durchgänge (30) für Stecknieten oder Schrauben (31), oder dgl..

12. Überrollschutz-Körper nach Anspruch 4, **dadurch gekennzeichnet, dass** in die eine, wannenförmig gestaltete Schale (B) die aus Längs- und Querhochstegen (12, 13, 15) und ggfs. wenigstens einem Mittelsteg (14) bestehende Aussteifungsstruktur (V) aus Kunststoff oder faserverstärktem Kunststoff, vorzugsweise mit einem Überstand über die Schalenränder (8) direkt eingespritzt und angehaftet ist, und dass die andere, ebenfalls wannenförmige Schale (A) mit der einen Schale (B) und der Aussteifungsstruktur (V) kraft- und/oder formschlüssig verbunden ist.

13. Überrollschutz-Körper nach Anspruch 12, **dadurch gekennzeichnet, dass** an der eingespritzten Aussteifungsstruktur (V), vorzugsweise an Hochsteg-Kreuzungsstellen, Dome (17) angeformt sind, die durch Ausschnitte (18) der anderen Schale (A) greifen und von der Außenseite her, vorzugsweise, verstemmt, heißluftgefügt, ultraschallgeschweißt, oder verklebt sind.

14. Überrollschutz-Körper nach Anspruch 4, **dadurch gekennzeichnet, dass** Aussteifungsstruktur (V) aus Kunststoff direkt in das beispielsweise mit mindestens einem kanalartigen Hohlraum (H) ausgebildete Hohlprofil (R, B') eingespritzt ist.

15. Überrollschutz-Körper nach Anspruch 1, **dadurch gekennzeichnet, dass** die Aussteifungsstrukturen (V) aus Kunststoff vorgefertigt und in das mit wenigstens einem kanalartigen Hohlraum (H) ausgebildete Hohlprofil (R, B') eingeschoben und, beispielsweise, mittels die Hohlprofil-Flachseiten (27, 25) verbindender Stecknieten (31), festgelegt ist.

16. Überrollschutz-Körper nach Anspruch 10, **dadurch gekennzeichnet, dass** die aus Aussteifungsstruktur (V) mehrfach an beiden Schalen (A, B) befestigt, vorzugsweise punktgeschweißt, vernietet oder verschraubt ist.

17. Überrollschutz-Körper nach wenigstens einem der vorhergehenden Ansprüche, **dadurch gekennzeichnet, dass** die im Hohlraum (H) untergebrachte Aussteifungsstruktur (V), vorzugsweise in Randbereichen des Überrollschutz-Körpers (K), nach außen greifende Funktionsteile (T) aufweist, vorzugsweise zur Ausbildung von Gleitoder Rastschienen, als Anschraubpunkte, Klipsaufnahmen, Umspritzbestandteile, oder dgl..
